Europäisches Patentamt

European Patent Office

Office européen des brevets

(19)

(11) Numéro de publication: **0 143 721**
**B1**

(12) **FASCICULE DE BREVET EUROPEEN**

(45) Date de publication du fascicule du brevet:
**30.03.88**

(51) Int. Cl.⁴: **B 64 D 7/08**

(21) Numéro de dépôt: **84402437.2**

(22) Date de dépôt: **29.11.84**

(54) **Dispositif d'emport et d'éjection de charges sous avion, comportant des bras d'appui positionnés selon le diamètre des charges.**

(30) Priorité: **30.11.83 FR 8319141**

(43) Date de publication de la demande:
**05.06.85 Bulletin 85/23**

(45) Mention de la délivrance du brevet:
**30.03.88 Bulletin 88/13**

(84) Etats contractants désignés:
**DE GB IT SE**

(56) Documents cités:
**FR - A - 2 380 185**
**FR - A - 2 413 267**
**GB - A - 574 948**
**GB - A - 2 072 812**
**GB - A - 2 076 946**

(73) Titulaire: **R. ALKAN & Cie., Rue du 8 mai 1945,**
**F-94460 Valenton (FR)**

(72) Inventeur: **Hasquenoph, Jean, 12, rue du 27 aot 1944,**
**F-77400 Lagny sur Marne (FR)**
Inventeur: **Coutin, Pierre, 117, rue du Gòn. Michel Bizot,**
**F-75012 Paris (FR)**

(74) Mandataire: **Hud, Robert et al, Cabinet**
**COLLIGNON 6, rue de Madrid, F-75008 Paris (FR)**

ACTORUM AG

**Description**

Le dispositif objet de la présente invention, décrit ci-après et représenté au dessin annexé, est un déclencheur éjecteur capable d'emporter et d'éjecter des charges comportant des anneaux à entraxe de 355,6 mm (14 pouces) ou de 762 mm (30 pouces). Il comporte les organes qui équipent généralement ce genre de dispositif et qui font l'objet de différents brevets déjà déposés ou obtenus par la même société.

En particulier, son mécanisme de déclenchement s'apparente au mécanisme déjà décrit dans le document de brevet FR-A-2 555 543 du 29 novembre 1983 pour: «Dispositif d'emport et de largage de charges sur avion à triple échappement par galets» et au dispositif objet du document de brevet FR-A-2 413 267 intitulé «Dispositif pour le calage sur appuis fixes de charges emportées sous avion», dans lequel le calage des charges est obtenu par un relevage complémentaire des crochets, ceux-ci pouvant être à l'écartement de 355,6 mm (14 pouces) et/ou de 762 mm (30 pouces).

Comme la course de relevage complémentaire des crochets peut se trouver insuffisante pour caler sur des mêmes appuis fixes des charges de diamètres nettement différents de 200 mm par exemple jusqu'à l'infini (charges planes), on a imaginé des appuis articulés particuliers pouvant prendre plusieurs positions selon le diamètre de la charge.

Ainsi le document de brevet FR-A-2 380 185 propose d'utiliser dans un appareil de larguage à éjecteur pour charges sous avion, un dispositif anti-roulis adaptable à des charges de différents diamètres. Ce dispositif anti-roulis comprend des bras d'appui qui sont montés pivotants autour d'axes orientés parallèlement à l'axe longitudinal de la charge et qui sont destinés à coopérer avec la surface supérieure de cette charge pour assurer son calage. Après accrochage de la charge et abaissement contre elle des bras d'appui, chacun de ceux-ci est maintenu en position active de calage par une butée à déplacement transversal qui se place automatiquement en position fixe par l'action de coin d'un coulisseau contraint par ressort.

Par rapport au document FR-A-2 380 185 qui décrit un dispositif d'emport sous avion et d'éjection pour charges suspendues à des crochets, comporte des bras d'appui pivotant autour d'axes parallèles à l'axe longitudinal de la charge qui coopèrent avec la surface supérieure de la charge pour assurer le calage de celle-ci et qui sont maintenus en position active par des butées se plaçant automatiquement en position fixe après accrochage de la charge et abaissement contre elle des bras d'appui, chaque bras d'appui étant associé à une came à étages servant de butée, l'invention se caractérise par le fait que les crochets de suspension de la charge sont relevables afin d'appliquer la charge contre les bras d'appui en exerçant une précontrainte précise et constante, et par le fait que les bras d'appui pivotants sont calés par des butées qui sont constamment maintenues en positions symétriques et qui comprennent des étages de calage distincts correspondant chacun à un domaine de diamètre de la charge.

La manœuvre de positionnement des bras d'appui est extrêmement simple: après accrochage de la charge (crochets en position basse), il suffit d'abaisser les appuis articulés en les amenant au contact de la charge pour que les cames correspondantes, poussées par les ressorts, interposent alors l'étage de butée convenable limitant la remontée de l'appui.

Afin de pouvoir exécuter cette manœuvre par un côté ou l'autre du dispositif et de réduire ainsi le temps de mise à poste de la charge, chaque appui est relié avec son vis-à-vis à l'aide d'engrenages et d'un accouplement souple de façon que ces appuis s'abaissent ou se relèvent simultanément. L'accouplement souple est destiné à compenser les tolérances d'usinage des pièces, afin que le talon de chaque bras d'appui vienne prendre contact avec l'étage de la came qui lui est associé, sans que les organes de liaison soient soumis à des efforts importants au cas où la simultanéité des contacts ne serait pas réalisée.

La position correcte des cames formant butées qui doit correspondre à la charge emportée est vérifiée à l'aide d'un maneton se déplaçant devant une graduation indiquant le diamètre des charges. De façon à déceler le bec à bec possible dans l'enclinquetage que forment la butée des bras d'appui et les étages des cames, des repères sont prévus sur les bras pour contrôler simultanément que leur positionnement correspond à celui des cames formant butées, c'est-à-dire au même diamètre de charge emportée.

Pour bien faire comprendre l'invention, on en décrira ci-après plus en détail un mode d'exécution en référence au dessin schématique annexé dans lequel:

la figure 1 est une vue extérieure de l'ensemble du déclencheur éjecteur, représentée en perspective schématique;

la figure 2 est une vue transversale montrant les appuis articulés représentés partiellement en coupe;

la figure 3 est une vue partielle montrant les mêmes appuis vus en plan;

la figure 4 représente en plan la liaison de deux cames à étages opposées;

la figure 5 représente la visualisation du contrôle du bon positionnement des appuis et des cames à étages; et

les figures 6, 7 et 8 représentent les diverses positions possibles des appuis en fonction du diamètre des charges emportées.

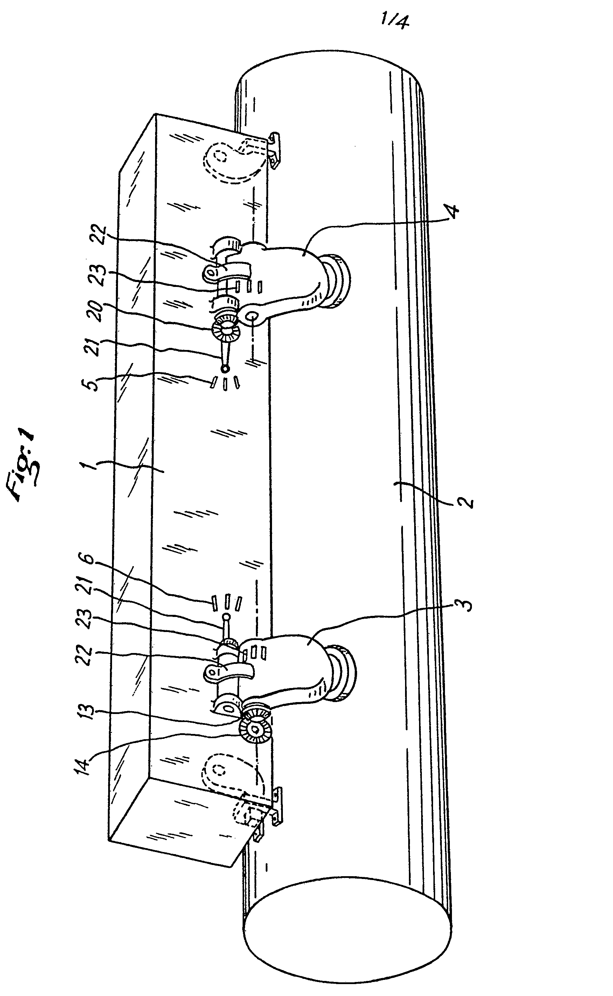

La vue schématique de la figure 1 montre le déclencheur éjecteur 1 sous la forme d'un parallélépipède rectangle et la charge 2 sous la forme d'un cylindre muni de deux anneaux suspendus aux deux crochets du déclencheur, cette charge étant calée par les bras d'appui articulés 3-4 apparaissant sur un côté du déclencheur qui porte aussi du côté opposé deux appuis symétriques. On a indiqué en 5 et 6 les repères indiquant les positions des cames à étages.

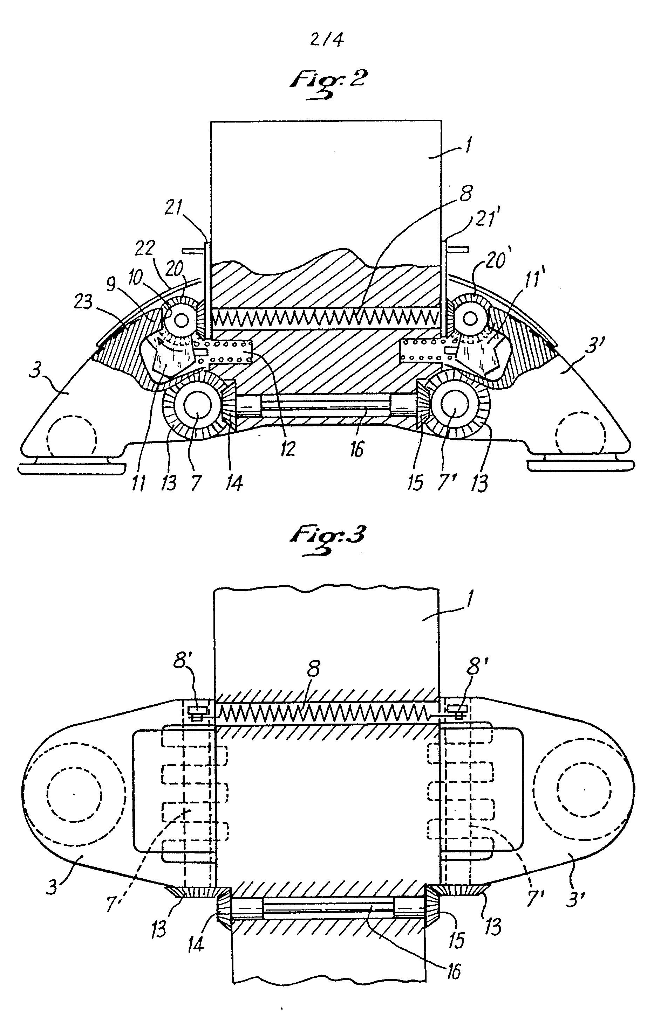

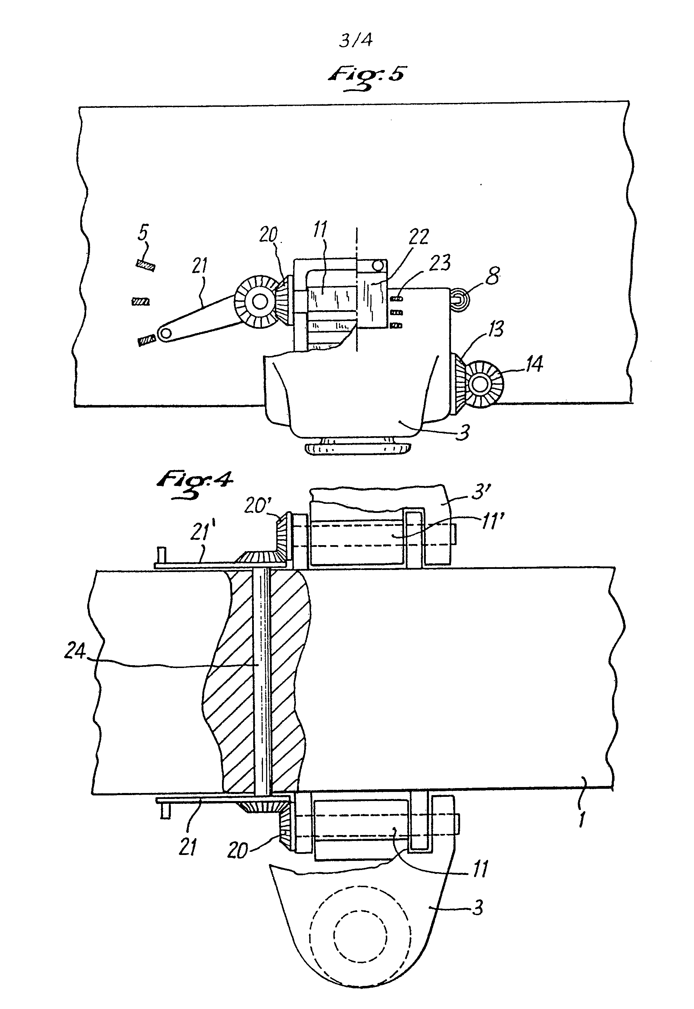

La figure 2 montre deux bras d'appui opposés terminés par des éléments de calage pivotants. Ces bras peuvent pivoter autour des axes 7–7′ et ils sont rappelés en position haute par un ressort de traction commun 8 passant à travers le déclencheur pour s'accrocher par ses extrémités sur des pions 8′ (figure 3) respectivement solidaires des bras 3–3′.

Chaque bras d'appui 3–3′ présente vers le haut un talon de retenu 9 qui, dans la position relevée des bras de la figure 2, se trouve en appui sur l'étage 10 de la came à étages 11–11′, cet étage 10 étant celui qui est le plus proche de l'axe de pivotement de la came 11–11′ soumise à l'action d'un ressort 12 tendant à la faire pivoter dans le sens de la flèche de la figure 2 quand le bras 3 est abaissé de façon que cette came puisse présenter, en regard du talon de retenue 9 du bras, ses étages suivants à des distances croissantes de son axe de façon à maintenir le bras 3–3′ en des positions plus basses qu'à la figure 2.

Chaque bras 3–3′ porte un pignon conique 13 dont l'axe coïncide avec l'axe de pivotement du bras et les pignons 13 de deux bras opposés 3–3′ sont reliés par deux pignons coniques 14–15 en prise avec les pignons 13 et portés par les extrémités d'une liaison flexible 16 telle qu'une lame.

Comme le montrent les figures 2 et 4, chaque came 11–11′ est solidaire d'un pignon conique 20–20′ et les deux pignons 20–20′ de cames opposées engrènent respectivement avec deux pignons coniques solidaires respectivement de deux leviers de manœuvre et de contrôle 21–21′ portés respectivement par les deux extrémités d'un arbre transversal tournant 24 passant à travers l'éjecteur 1. Le maneton de chacun des leviers de manœuvre 21–21′ se déplace en regard d'une graduation 5 (figure 5) mentionnée ci-dessus permettant de contrôler la position des cames à étages 11–11′ tandis que la position de chaque bras 3–3′ peut se lire en regard d'un index fixe 22 sur une graduation 23 portée par le bras (figures 1 et 5).

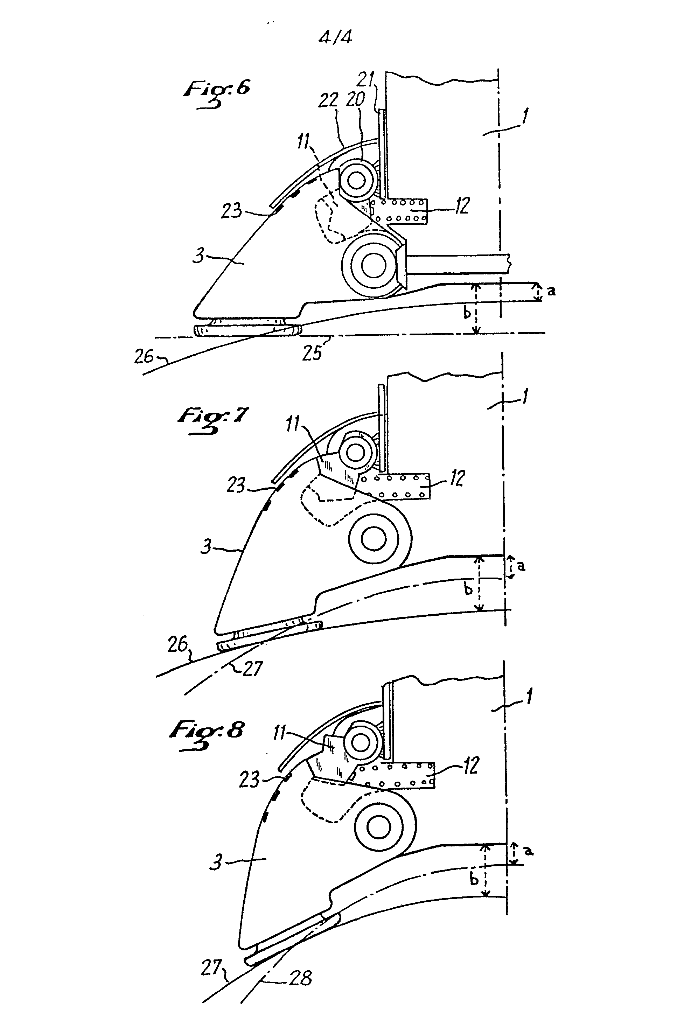

Le fonctionnement du dispositif représenté peut se résumer comme indiqué ci-après. Avant d'accrocher la charge à emporter, on amène les crochets de l'éjecteur à leur position basse par le moyen exposé au brevet français de la même société FR-A-2 413 267 et on s'assure du relèvement des bras d'appui 3–3′ pour donner le maximum d'aisance dans la manœuvre; comme les bras d'appui 3–3′ sont sollicités vers le haut par les ressort 8, il suffit de vérifier que les cames à étages 11–11′ sont dans la position de la figure 2 permettant aux bras d'appui 3–3′ de prendre la position la plus haute correspondant à l'emport de la charge la plus grosse, c'est-à-dire la position de la figure 6. On accroche ensuite la charge aux deux crochets de l'éjecteur et on abaisse les bras d'appui 3–3′ en les amenant manuellement au contact de la charge, chaque bras d'appui 3–3′ entraînant le bras transversalement opposé par la transmission tournante 16 qui relie deux bras opposés. Les cames 11–11′, sollicitées par les ressorts 12, viennent s'interposer automatiquement pour limiter le relevage des appuis en présentant éventuellement, en regard des talons de retenue 9, des étages plus éloignés des axes des cames que les étages 10. La bonne position des cames entraîne la bonne position des leviers 21 en regard des graduations 5–6, ce qui permet la vérification du positionnement des cames. On s'assure de même que les bras d'appui 3–3′ ont pris la position conjuguée en vérifiant que les index 22 se trouvent en regard des repères correspondants.

Les figures 6, 7 et 8 représentent respectivement les positions que peut prendre un bras d'appui 3 et la came à étages 11 associée pour l'emport de charges d'un diamètre compris dans les intervalles suivants:

1) diamètre supérieur ou égal à 700 mm;
2) diamètre entre 700 et 350 mm;
3) diamètre entre 350 et 200 mm.

Sur chacune de ces figures, on a représenté les deux profils extrêmes des charges auxquelles correspond la position particulière du bras 3. Ces profils extrêmes comprennent, pour la figure 6, le profil rectiligne 25 d'une charge plate et le profil 26 d'une charge d'un diamètre de 700 mm; ils comprennent, pour la figure 7, le profil 26 ci-dessus et le profil 27 d'une charge ayant un diamètre de 350 mm et enfin, pour la figure 8, ils comprennent le profil 27 ci-dessus et le profil 28 d'une charge ayant un diamètre de 200 mm. Sur les trois figures 6, 7 et 8, on a indiqué les côtes extrêmes a et b du dessus de la charge par rapport à la base de l'éjecteur, ces cotes étant les mêmes pour les trois séries de diamètres de charge correspondant à la butée des bras d'appui contre les trois étages des cames 11. Ces cotes sont toujours compatibles avec les courses de relevage permises pour les crochets.

On notera que les dispositions faisant l'objet de la présente invention pourraient être utilisées en association avec un dispositif d'emport indépendant et relevable dans sa totalité, les bras d'appui étant alors installés sur un élément fixe de l'aéronef.

## Revendications

1. Dispositif d'emport sous avion et d'éjection pour charges (2) suspendues à des crochets, comportant des bras d'appui (3, 3′, 4, 4′) pivotant autour d'axes (7, 7′) parallèles à l'axe longitudinal de la charge qui coopèrent avec la surface supérieure de la charge pour assurer le calage de celle-ci et qui sont maintenus en position active par des butées se plaçant automatiquement en position fixe après accrochage de la charge et abaissement contre elle des bras d'appui, chaque bras d'appui étant associé à une came à étages servant de butée (11, 11′), caractérisé par le fait que les crochets de suspension de la charge sont relevables afin d'appliquer la charge contre les bras d'appui (3, 3′) en exerçant une précontrainte précise et constante, et par le fait que les bras d'appui pivotants (3, 3′) sont calés par des butées (11, 11′) qui sont constamment maintenues en positions symétriques et qui comprennent des étages de calage distincts correspondant chacun à un domaine de diamètre de la charge.

2. Dispositif selon la revendication 1, caractérisé en ce que les bras d'appui (3, 3') sont sollicités au relevage par des ressorts (8).

3. Dispositif selon la revendication 1 ou la revendication 2, dans lequel chaque bras d'appui (3, 3') comporte un talon de retenue (9) susceptible de prendre appui sur une came à étages (11).

4. Dispositif selon la revendication 3, dans lequel la came à étages (11) vient s'interposer sous l'action d'un ressort (12) pour limiter le retour vers le haut du bras d'appui (3, 3') après que ce bras ait été abaissé jusqu'au contact de la charge (2).

5. Dispositif selon la revendication 3 ou la revendication 4, dans lequel chaque bras d'appui (3, 3') est accouplé à un bras transversalement opposé par des engrenages (13–14–15) et une liaison souple (16) pour assurer le mouvement simultané des bras et leur appui simultané sur les cames étagées associées (11–11').

6. Dispositif selon l'une quelconque des revendications 3 à 5, dans lequel des manetons (21) solidaires des cames à étages (11) indiquent la position de celles-ci devant des repères (5) correspondant aux diamètres des charges (2) à emporter.

7. Dispositif selon l'une quelconque des revendications précédentes, dans lequel des repères (23) sont prévus sur les bras d'appui (3–3') pour le contrôle de leur bonne position par rapport aux butées ou cames (11) limitant le relevage des bras d'appui.

## Patentansprüche

1. Halte- und Abwurfvorrichtung für an einem Flugzeug an Haken aufgehängte Lasten (2), mit um Achsen (7, 7') parallel zur Längsachse der Last schwenkbaren Stützarmen (3, 3', 4, 4'), die mit der Oberfläche der Last zu deren Festkeilen zusammenwirken und in Arbeitsstellung gehalten werden durch Anschläge, die sich automatisch nach Einhaken der Last in feste Stellung setzen und gegen die Last Stützarme absenken, wobei jeder Stützarm einem als Anschlag dienenden Stufennocken (11, 11') zugeordnet ist, dadurch gekennzeichnet, dass die Haken zum Aufhängen der Last einziehbar sind, um die Last gegen die Stützarme (3, 3') unter Ausübung einer präzisen und konstanten Vorspannung anzusetzen, wie auch dadurch, dass die schwenkbaren Stützarme (3, 3') durch Anschläge (11, 11') verkeilt sind, die ständig in symmetrischen Stellungen gehalten sind und unterschiedliche Verkeilstufen umfassen, die jeweils einem Durchmesserbereich der Last entsprechen.

2. Vorrichtung nach Anspruch 1, dadurch gekennzeichnet, dass die Stützarme (3, 3') beim Anheben durch Federn (8) belastet sind.

3. Vorrichtung nach Anspruch 1 oder Anspruch 2, dadurch gekennzeichnet, dass jeder Stützarm (3, 3') eine Haltenase (9) umfasst, die sich auf einen Stufennocken (11) abstützen kann.

4. Vorrichtung nach Anspruch 3, dadurch gekennzeichnet, dass der Stufennocken (11) unter der Wirkung einer Feder (12) in Eingriff gelangt zum Begrenzen der Rücklaufbewegung des Stützarms (3, 3') nach oben, nachdem dieser bis zur Berührung der Last (2) abgesenkt worden ist.

5. Vorrichtung nach Anspruch 3 oder Anspruch 4, dadurch gekennzeichnet, dass jeder Stützarm (3, 3') an einen quer entgegengesetzten Arm gekoppelt ist über Zahnräder (13–14–15) und eine elastische Verbindung (16) zum Sichern einer gleichzeitigen Bewegung der Arme und ihrer gleichzeitigen Abstützung auf die zugeordneten Stufennocken (11, 11').

6. Vorrichtung nach einem der Ansprüche 3 bis 5, dadurch gekennzeichnet, dass Kurbelzapfen (21) in fester Verbindung mit den Stufennocken (11) deren Stellung vor Markierungen (5) entsprechend den Durchmessern der mitzunehmenden Lasten (2) anzeigen.

7. Vorrichtung nach einem der vorangehenden Ansprüche, dadurch gekennzeichnet, dass Markierungen (23) an den Stützarmen (3, 3') vorgesehen sind zur Kontrolle ihrer richtigen Stellung in bezug auf die Anschläge oder Nocken (11) zum Begrenzen der Aufwärtsbewegung der Stützarme.

## Claims

1. Carrying and releasing device for loads (2) suspended on hooks below an aircraft, and comprising support arms (3, 3', 4, 4') pivoting about axes (7, 7') parallel with the longitudinal axis of the load and which cooperate with the upper surface of the load to ensure wedging in position thereof and which are held in actuating position by stops automatically assuming a fixed position after suspension of the load and lowering of the support arms against the load, each support arm being associated with a staged cam (11, 11') acting as a stop, characterised in that the load suspension hooks are raisable to apply the load against the support arms (3, 3') while applying precise and constant preconstraint, and in that the pivoting support arms (3, 3') are wedged by stops (11, 11') which are constantly held in symmetric positions and which comprise defined wedging stages each corresponding to a range of load diameters.

2. Device as in claim 1, characterised in that the support arms (3, 3') are urged upwards by springs (8) during raising.

3. Device as in claim 1 or claim 2, wherein each support arm (3, 3') comprises a retainer heel (9) adapted to abut against a staged cam (11).

4. Device as in claim 3, wherein the staged cam (11) is brought into operation by a spring (12) to limit the return upwards of the support arm (3, 3') after said arm has been lowered into contact with the load (2).

5. Device as in claim 3 or claim 4, wherein each support arm (3, 3') is coupled to an arm transversly opposed by gears (13, 14, 15) and a flexible coupling (16) to ensure simultaneous movement of the arms and their simultaneous engagement with the associated staged cams (11, 11').

6. Device as in any of claims 3–5, wherein levers (21) integral with the staged cams (11) indicate the position of said cams against marks (5) corresponding to the diameters of the loads (2) to be carried.

7. Device as in any of the preceding claims, wherein marks (23) are provided on the support arms (3, 3') to check their correct positioning in relation to the stops or cams (11) limiting the raising of the support arms.

Fig.1

## Fig. 2

## Fig. 3

*Fig.5*

*Fig.4*

Fig. 6

Fig. 7

Fig. 8